# EUROPEAN PATENT SPECIFICATION

(11) **EP 2 183 583 B1**
(45) Date of publication and mention of the grant of the patent: **01.06.2011**
(21) Application number: 08789846.6
(22) Date of filing: 31.08.2008
(51) Int. Cl.: G01N 27/447, C08F 20/56, C08F 120/56, C08F 220/56, C08L 33/26

(54) **A BUFFER SYSTEM FOR A LONG-LASTING PRECAST ELECTROPHORESIS GEL**
PUFFERSYSTEM FÜR EIN LANGLEBIGES FERTIG GEGOSSENES ELEKTROPHORESEGEL
SYSTÈME TAMPON POUR GEL D'ÉLECTROPHORÈSE PRÉCOULÉ LONGUE DURÉE

(30) Priority: 30.08.2007 IL 18563807; 25.02.2008 IL 18975908; 25.02.2008 IL 18976008
(43) Date of publication of application: 12.05.2010
(73) Proprietor: Gene Bio-Application Ltd., Kfar Hanagid 76875 (IL)
(72) Inventor: OSMAN, Farhat, 20173 Sachnin (IL); BEN-ASOULI, Yitzhak, 76875 Kfar Hanagid (IL)
(74) Representative: White, Nina Louise
(86) International application number: PCT/IL2008/001174
(87) International publication number: WO 2009/027983

(56) References cited:
- EP-A- 0 566 784
- EP-A- 1 167 962
- WO-A-01/60841
- WO-A-2007/076452
- US-A1- 2005 121 325

## Description

### Field of the Invention

The present invention relates to the field of gel electrophoresis. Specifically, the present invention relates to precast polyacrylamide gels having a long-lasting shelf life.

### Background of the Invention

Gel electrophoresis is a standard method in molecular biology to separate and identify biological molecules such as proteins, nucleic acids and oligos. Gels made of polyacrylamide (PAA) are commonly employed for electrophoresis due to convenient physical properties, including optical transparence, electrical neutrality and the ability to choose the desirable pore sizes.

Particularly, the SDS-polyacrylamide gel electrophoresis method is a powerful tool, which resolves proteins according to their molecular weights. To counter the proteins' variations in shape, charge and size, the protein sample has to be initially denatured with SDS, an anionic detergent. The SDS anions bind to the proteins, which consequently unfold and become uniformly coated with a negative charge, rendering the proteins similar in shape and charge-to-mass ratio. Moreover, SDS will not only unfold proteins, but it will also separate those with several subunits into individual polypeptide chains. The mixture of the denatured proteins is subsequently loaded into a well that has been cast in the top of a polyacrylamide gel. Under an electric field, the negatively charged polypeptides migrate through the gel towards the positive electrode at the bottom of the gel through a tangled network of polyacrylamide. Polypeptides which are smaller in size migrate more easily and faster through the network pores compared with the larger polypeptides. The distance traversed by the polypeptides in the gel relates only to their molecular weight as they all have a similar charge-to mass ratio.

The current practice is to prepare and run the gels using basic buffers under basic conditions, with a typical pH around 8.8. The Laemmli buffer system which uses Tris(hydroxymethyl)aminomethane and hydrochloric acid (Tris-HCl) is a typical choice for the preparation of denaturing polyacrylamide gels. The Laemmli gels are composed of two different gels (stacking and separating gels), each cast at a different pH. In addition, the gel electrode buffer (running buffer) is at a third, different pH. The separating gel is buffered with Tris by adjusting it to pH 8.8 with HCl. The stacking gel and the sample buffer are also buffered with Tris but adjusted to pH 6.8 with HCl. The running buffer is also buffered by Tris but its pH is adjusted to be slightly below the separating gel using glycine only.

These employment of gel and buffer discontinuities in the Laemmli system is designed to improve the resolution of electrophoresis (especially protein electrophoresis). The role of the chloride and glycine ions in this system is to establish a so called Kohlrausch boundary in the stacking gel in which the proteins are stacked into a thin layer between the leading chloride ions and the trailing glycine molecules.

Unfortunately the high pH values used in the separating gel in the Laemmli buffering system promote disulfide bond formation between cysteine residues in the proteins. Moreover, the high pH lowers the stability of the gels on storing. Currently, a major impediment in the production and sale of pre-cast polyacrylamide electrophoresis gel is the rather short shelf life of about three months. It is believed that the degradation of the gel is a consequence of hydrolysis of the amide groups to form partially anionic carboxylic acid derivatives under basic conditions. This hydrolysis leads to loss of resolution of the separated molecules, reduced migration distance of the separated molecules, and reduced intensity of protein staining.

Until recently, it has been thought that the degradation of the gels under basic conditions was inevitable. Attempts of extending the shelf life of gels by lowering the pH to circum neutral have been complicated by the parallel need for an effective yet inexpensive buffering system, as well as by the limitations regarding the concentration and pH of the buffers; lowering the gel pH to 7 or less may affect the ambit of molecular weights of the analyzed species, whereas Tris concentrations outside the range 0.05 - 0.2 M affect the electrophoresis pattern or the run time.

US Pat. No. 6,783,651 discloses a buffer system for a long-lasting precast electrophoresis gel wherein separation occurs at neutral pH. The gel buffer solution in the buffer system contains a Bis-Tris titrated with hydrochloric acid to pH 7, while the running buffer solution contains MOPS or MES. Said electrophoresis gel system is described to have an increased useful shelf-life of up to twelve months, but the buffer system requires special molecule markers. Moreover, the speed of electrophoretic migration is lower in the system when using prior art electrophoresis buffer solutions, for example a commonly available Laemmli's electrophoresis buffer solution containing glycine.

US Pat. No. 6,733,647 describes a process for manufacturing gels with an extended shelf-life involving a gel buffer system comprising Tris at a concentration in the range of 0.15 to 0.25 M, titrated with HCl to a pH between 6.5-7.5. Although the polyacrylamide gel has somewhat higher shelf-life, the system using running buffer containing glycine reduces the quality of the protein separation. US 6,726,821 alleviates some of the problems by combining glycine with an ampholyte and with Tris. However, the pH of the gel increases to about 7.1 during storage at 4°C, causing a notable hydrolysis in the acrylamide.

Also EP 0566784 A1 discloses a precast polyacrylamide gel for use in gel electrophoresis comprising an aqueous solution of Tris at a concentration of 0,1 M, hydrochloric acid adjusting the pH to 7.4, a secondary amine (TES or TAPS) and various ampholytes (e.g. glycine, serine or tricine).

In view of the above problems, and further in view of the supreme importance of the electrophoresis techniques for progress in molecular biology, there is continuing need for novel approaches. It is therefore an object of the invention to provide a precast polyacrylamide gel with a long shelf-life without compromising performance.

Other objects and advantages of present invention will appear as description proceeds.

### Summary of the Invention

The invention provides a precast polyacrylamide gel for use in gel electrophoresis, comprising i) an aqueous solution of tris(hydroxymethyl) aminomethane (Tris) at a concentration of 0.05 to 0.15 M; ii) a tertiary amine at a concentration of from 0.001 to 0.2 M comprising in the molecule one sulfonic group, the pKa of said amine at the temperature of 25°C having a value of from 6.6 to 8.0; iii) optionally one or more ampholytes exhibiting an isoelectric point (pI) of from 5.4 to 6.4 at a total concentration of from 0.01 to 0.4 M; and iv) hydrochloric acid to adjust the pH to between 5.5 and 7.5 at the temperature of 25°C. A precast gel according to the invention comprises preferably an aqueous solution of Tris at a concentration of 0.05 to 0.15 M; an N,N'-disubstituted piperazine (DSP) comprising in the molecule one sulfonic group, the pKa of said amine at the temperature of 25°C having a value of from 6.6 to 8.0; of formula (I) 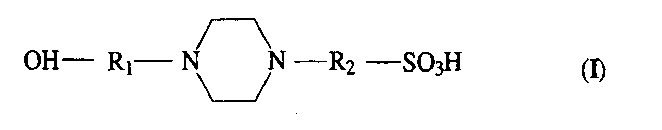 at a concentration of from 0.001 to 0.1 M, wherein R₁ and R₂ are independently selected from C₁-C₄ alkylene groups optionally substituted with a lower alkyl or hydroxyl group; one or more ampholytes exhibiting an isoelectric point (pI) of from 5.4 to 6.4 at a total concentration of from 0.01 to 0.08 M or 0.2 to 0.4 M; and hydrochloric acid to adjust the pH to between 5.5 and 7.0 at the temperature of 25°C. In a preferred embodiment of the
invention, the precast gel comprises an aqueous solution of Tris at a concentration of 0.05 to 0.15 M; an N,N'-disubstituted piperazine (DSP) comprising in the molecule one sulfonic group, the pKa of said amine at the temperature of 25°C having a value of from 6.6 to 8.0; of formula (I) 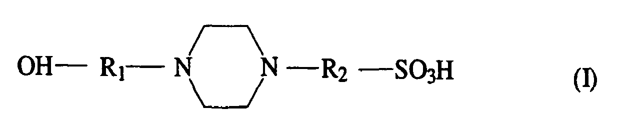 at a concentration of from 0.001 to 0.1 M, wherein R₁ and R₂ are independently selected from C₂-C₃ alkylene groups optionally substituted with a hydroxyl group; one or more ampholytes exhibiting an isoelectric point (pI) of from 5.4 to 6.4 at a total concentration of from 0.2 to 0.4 M; and hydrochloric acid to adjust the pH to between 6.0 and 7.0 at the temperature of 25°C. A preferred precast gel of the invention comprises a N,N'-disubstituted piperazine (DSP) comprising in the molecule one sulfonic group, the pKa of said amine at the temperature of 25°C having a value of from 6.6 to 7.6, of formula (I) 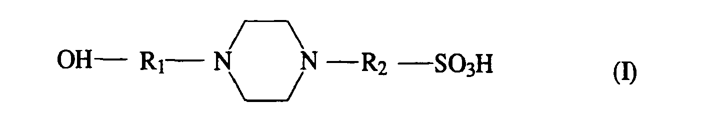 at a concentration of from 0.01 to 0.1 M, wherein R₁ and R₂ are independently selected from C₂-C₃ alkylene groups optionally substituted with a hydroxyl group; one or more ampholytes selected from the group consisting of glycine, serine, asparagine, tryptophane, methionine, and phenylalanine at a total concentration of from 0.2 to 0.4 M; hydrochloric acid to adjust the pH to between 6.2 and 6.8 at the temperature of 25°C; and polyacrylamide at a concentration of from about 4 w/v % to about 20 w/v %. In a preferred embodiment of the invention, the gel comprises asparagine and glycine at a total concentration of from 0.2 to 0.35 M. In other preferred embodiment, the invention provides a precast polyacrylamide gel for use in gel electrophoresis, comprising asparagine and serine at a total concentration of from 0.2 to 0.35 M. In an important aspect of the invention, said DSP is HEPES. A gel according to the invention may comprise polyacrylamide at a concentration of from about 4 w/v % to about 20 w/v %. In a preferred embodiment, a gel according to the invention comprises Tris at a concentration of 0.06 to 0.1 M, HEPES at a concentration of from 0.001 to 0.1 M, one or more ampholytes at a total concentration of from 0.2 to 0.35 M selected from asparagine, serine, glycine, tryptophane, methionine, and phenylalanine, and hydrochloric acid to pH of from 6.2 to 6.8. A gel according to the invention may be used in gel electrophoresis under denaturation conditions, for example in an SDS-PAGE system. The gel of the invention may be used in gel electrophoresis under non-denaturating conditions. A gel according to the invention may further comprise at least one component selected from surfactants, solvents, electrolytes, denaturation agents, and dyes. In a preferred component combination, the precast gel according to the invention comprises an aqueous solution of Tris at a concentration of 0.06 to 0.10 M; HEPES at a concentration of from 0.003 to 0.05 M; one or more ampholytes exhibiting an isoelectric point (pI) of from 5.4 to 6.4 at a total concentration of from 0.2 to 0.35 M; polyacrylamide at a concentration of from about 4 w/v % to about 20 w/v %; optionally one or more components selected from surfactants, solvents, electrolytes, denaturation agents, preserving agents, and dyes; and hydrochloric acid to adjust the pH to between 6.2 and 6.8 at the temperature of 25°C.

The invention, thus, provides a precast polyacrylamide gel for use in gel electrophoresis, while combining some known components and obtaining surprisingly good performance. Essentially, the improved gels comprise sulfonated amines exhibiting pKa of 6.6 to 8.0 at 25°C, ampholytes having pI of from 5.4 to 6.4, and tris-HCl providing the pH of 5.5-7.5; the tertiary amine having preferably a concentration of from 0.001 to 0.2 M, the ampholytes having a concentration in the range of 0.0 to 0.4 M. The invention provides electrophoretic gels with very high stability on storage, without compromising good separation of biomolecules when used in an electrophoretic system. Examples of said amine include BES, MOPS, HEPES, HEPPS (abbreviated also as EPPS), and HEPPSO; examples of said ampholyte include glycine, serine, asparagine, tryptophane, methionine, and phenylalanine. A precast gel according to the invention has a shelf life of preferably more than three months, and most preferably more than 9 months. The gels are preferably stored at 4°C.

The invention is directed to a method of preparing a stable, high performance gel for electrophoresis of biomolecules, comprising i) providing an aqueous solution comprising from 4 to 20 w/v % acrylamide (AA) and bis-acrylamide; Tris at 0.05 to 0.15 M; an N,N'-disubstituted piperazine (DSP) of formula (I) 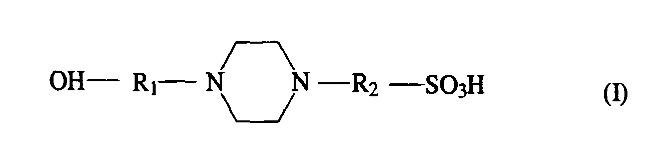 at a concentration of from 0.001 to 0.2 M, wherein R₁ and R₂ are independently selected from C₁-C₄ alkylene groups optionally substituted with a lower alkyl or hydroxyl group; optionally one or more ampholytes exhibiting an isoelectric point (pI) of from 5.4 to 6.4 at a total concentration of from 0.01 to 0.4 M; and hydrochloric acid to pH between 5.5 and 7.5 at the temperature of 25°C; ii) adding into the mixture obtained in step i) an aqueous solution of ammonium persulfate while mixing, and adding TEMED while mixing; iii) carefully homogenizing the mixture obtained in step ii) without trapping air bubbles; iv) casting the mixture obtained in step iii) into a slab-shape of desired dimensions; and v) sealing the slab-shaped gel in a polymeric wrap. A preferred method according to the invention comprises i) providing an aqueous solution comprising AA, Tris at a concentration of 0.05 to 0.15 M, HEPES at a concentration of from 0.001 to 0.1 M, at least one ampholyte selected from glycine, serine, asparagine, tryptophane, methionine, and phenylalanine at a concentration of from 0.2 to 0.35 M, and hydrochloric acid to a pH between 6.0 and 7.0; and polymerizing said AA, thereby obtaining a slab gel.

The invention aims at simplifying the laboratory operations associated with analyzing and separating biomolecules by means of electrophoresis, by providing gels with increased storage stability of precast gels without compromising good separation. The gels may be employed in known electrophoresis systems.

### Detailed Description of the Invention

It has now been found that a precast polyacrylamide (PAA) gel combining certain sulfonated amines with certain amino acids, further comprising Tris-HCl and slightly acidic pH, exhibits superior storage stability without compromising electrophoresis performance. Particularly useful is an aqueous composition exhibiting a pH around 6.5, comprising a sulfonated tertiary amine at a concentration of from about 0.01 M to about 0.1 M, one or two ampholytes at a concentration of around 0.3 M having isoelectric point (pI) of around 6, and Tris at a concentration of around 0.1 M. It has been found that biomolecules are well separated on the gel, and that the good performance of the gel is preserved even when the gel is stored for prolonged periods of time, for example for one year.

The performance of a precast gel depends on its composition at the time of its preparation, and further on the storage time. Involved are interactions between the initial gel components, the decomposition reactions in the gel during its storage, the interactions between the components and the analyzed biomolecules, etc. The separation of the biomolecule during an electrophoresis run is further affected by the electrophoresis conditions, such as the run time, the time courses of temperature and electric current, etc. In view of so many compounds being possibly combined in the gel, and so many parameters possibly affecting the performance, it is nearly impossible to predict an effect of even a minor change in the system. Since the gel electrophoresis has, for many years, been one of the most frequently used methods in biochemistry and biotechnology, any improvement is immensely important.

It has now been found that superior storage behavior is exhibited by gels of the invention that comprise a sulfonated tertiary amine, such as an N,N'-disubstituted piperazine (DSP), whereas the presence of ampholytes having a pI between 5.4 and 6.4 is advantageous. Important is, in the gel of the invention, the presence of Tris and its titration by an inorganic acid, particularly by hydrochloric acid (HCl). The neutralization of Tris by a strong acid, rather than by acetic acid or even by an ampholyte, is believed to contribute to the good performance of said gel. In a preferred aqueous composition to be comprised in the gel of the invention, Tris should have a concentration of between 0.05 M and 0.15, said tertiary amine should have a concentration of from 0.001 M to 0.2 M and its pKa at 25°C should be from 6.6 to 8.0, said one or more ampholytes at a total concentration of from 0.01 M to 0.4 M, and hydrochloric acid should adjust the pH to between 5.5 and 7.5 at the temperature of 25°C. Examples of said ampholytes include amino acids having pI of from 5.4 to 6.4.

A precast gel according to the invention preferably comprises an aqueous solution of Tris at a concentration of from 0.05 M to 0.15 M, for example from 0.06 M to 0.10 M, for example 0.07 M. Said precast gel preferably comprises a sulfonic group and a tertiary amine at a concentration of from 0.001 M to 0.2 M, more preferably from 0.001 M to 0.1 M, still more preferably from 0.003 M to 0.05 M, for example 0.02 M. Examples of tertiary amines may include BES. More preferred are amines having in the molecule two tertiary amino groups. The pKa of said amine at the temperature of 25°C has preferably a value of from 6.6 to 8.0, examples of such amines including HEPPS; more preferably said value is from 6.6 to 7.6, examples of such amines including MOPS. Still more preferable are amines comprising an N,N'-disubstituted piperazine (DSP) comprising in the molecule one sulfonic group, the pKa of said amine at the temperature of 25°C having a value of from 6.6 to 8.0, the examples including HEEPSO or HEPES; still more preferable are amines comprising a DSP comprising in the molecule one sulfonic group, the pKa of said amine at the temperature of 25°C having a value of from 6.6 to 7.6, the examples including HEPES. A precast gel according to the invention preferably comprises one or more ampholytes exhibiting an isoelectric point (pI) of from 5.4 to 6.4 at a total concentration of from 0.01 M to 0.4 M, more preferably at a concentration of from 0.01 M to 0.08 M or from 0.2 M to 0.4 M, still more preferably form the range of 0.2 to 0.4 M, for example from 0.2 to 0.4 M or from 0.2 to 0.35 M. Examples of said ampholyte include one or two ampholytes selected from glycine, serine, asparagine, tryptophane, methionine, and phenylalanine. Hydrochloric acid is added to the gel composition to adjust the pH to between 5.5 and 7.5 at the temperature of 25°C, preferably between 5.5 and 7.0, still more preferably from about 6 to about 7, for example from 6.1 to 6.9 or from 6.2 to 6.8.

Thus, an electrophoretic system is now enabled, comprising the gel which maintains its initial high quality identification and separation of biomolecules even after one year of storage or more. Said system comprises the stable medium of the invention in which said biomolecules to be identified or separated move in the electric field, a commercial or other electrophoretic device providing said field, and necessary buffers in accordance with the required task, easily obtained or prepared by a person skilled in art (see, for example, Bollag et. al.: Protein Methods). In said system, the pH of said medium is maintained at a suitable value, for example 6.3, during the storage at 4°C, and prevents acrylamide hydrolysis in the gel. The ampholytes may be selected from amino acids, for example combinations of glycine, serine, asparagine, and phenylalanine.

The instant system separates biomolecules of interest, while the initial good performance of the gel is preserved even when the gel is stored for prolonged periods, for example for one year. A preferred amine to be present in the gel is DSP, more preferably HEPES. The separating medium in a system according to the invention maintains the pH of the gel at a suitable value, for example 6.3, during the storage, and prevents acrylamide hydrolysis in the gel.

An example of the composition for use in a precast polyacrylamide (PAA) gel according to the invention comprises a PAA or arylamide (AA) in the range of 4-12 %, about 70 mM Tris, about 200 mM asparagine, and about 20 mM HEPES. Another example of a gel for separating biomolecules according to the invention is a PAA gel comprising 12% AA, about 0.1 M Tris, about 0.1 M asparagine, about 0.2 M glycine, about 20 mM HEPES, and HCl to pH 6.3 at 25°C, which gel is used for separating polypeptides in the molecular range of 10-170 kDa.

The invention is thus directed to the method of separating biomolecules, comprising employing a PAA gel which preserves its superior separating features during prolonged storage, which gel contains beside Tris and a DSP also ampholytes exhibiting an isoelectric point (pI) of from 5.4 to 6.4, while the pH of the mixture is adjusted with HCl to a value between 6 and 7, for example to 6.1-6.8 or 6.2-6.6 or 6.3-6.5.

The invention aims at providing a precast gel comprising PAA at a concentration of from about 4 w/v % to about 20 w/v %, for use in slab electrophoresis, the gel being sealed and stored for up to 12 months or more, and then used without a loss in the initial resolution power. A preferred gel according to the invention may be stored for more than one year, for example up to 13 months, or up to 14 months, or up to 15 months. In one aspect of the invention, said gel is used for electrophoresis under denaturation conditions. Preferably said denaturation conditions comprise the use of SDS in SDS-PAGE. In another aspect of the invention, said gel is used in gel electrophoresis under nondenaturation conditions. Preferably, the gel is stored at a temperature lower than ambient, for example at about 4°C.

The invention provides a method of preparing a stable, high performance gel for electrophoresis, comprising admixing, to an AA-containing mixture, ampholytes having pI of from 5.4 to 6.4, and a piperazine derivative substituted on both nitrogen atoms with alkylenes optionally branched and optionally further hydroxylated.

When using the term ampholyte in the instant specification, related to is a compound having in its molecule both basic and acidic groups, but excluding tertiary amines comprising in their molecules sulphonic groups.

These and other aspects of the invention will become clear from the following examples, which are illustrative only and do not limit the invention.

### Examples

The gels were cast in mini gel cassettes (gel size 8 cm x 6 cm x 1 mm). The solutions used in polymerization were prepared by mixing stock solutions of acrylamide/Bis, Tris-HCl, Glycine, Asparagine, and HEPES, and by adding water to dilute to the appropriate concentration. The pH of the composition before polymerizing was adjusted to the required value by addition of HCl. Examples 1 and 2 relate to gels used immediately after their preparation, Examples 3 and 4 relate to gels used after one-year storage at 4°C.

### Example 1

A polyacrylamide gel was cast with an acrylamide concentration of 4%T/2.6%C in the stacking region and 12%T/2.6%C in the resolving region of the gel. The concentration of Tris and Asparagine in the gel composition was 0.07 M and 0.25 M respectively, the pH being adjusted to 6.3 using HCl. Samples of prestained molecular weight marker which was a commercially available marker containing samples denatured by the addition of DTT were separated on this gel using an electrode buffer of Tris (25 mM), Glycine (191 mM) and SDS (0.1%). The gel was electrophoresed for 40 minutes at a voltage of 150V. The proteins in the standard that remained on the gel were 170 kDa, 130 kDa, 100 kDa, 70 kDa, 55 kDa, 40 kDa, 35 kDa, 25 kDa, 15 kDa and 10 kDa. The markers were distributed along the gel such that the protein of 170 kDa was about 16% of the way down the gel and the protein of 10 kDa was about 90% of the way down the gel.

### Example 2

A polyacrylamide gel was cast with an acrylamide concentration of 4%T/2.6%C in the stacking region and 12%T/2.6%C in the resolving region of the gel. The concentration of Tris, Asparagine and HEPES in the gel was 0.07 M, 0.25 M and 0.02M respectively, the pH being adjusted to 6.3 using HCl. Samples of prestained molecular weight marker which was a commercially available marker containing samples denatured by the addition of DTT were separated on this gel using an electrode buffer of Tris (25 mM), Glycine (191 mM) and SDS (0.1%). The gel was electrophoresed for 40 minutes at a voltage of 150V. The proteins in the standard that remained on the gel were 170 kDa, 130 kDa, 100 kDa, 70 kDa, 55 kDa, 40 kDa, 35 kDa, 25 kDa, 15 kDa and 10 kDa. The markers were distributed along the gel such that the protein of 170 kDa was about 12% of the way down the gel and the protein of 10 kDa was about 85% of the way down the gel.

### Example 3

A polyacrylamide gel was cast with an acrylamide concentration of 4%T/2.6%C in the stacking region and 12%T/2.6%C in the resolving region of the gel. The concentration of Tris and Asparagine in the gel was 0.07 M and 0.25 M respectively, the pH being adjusted to 6.3 using HCl. The polyacrylamide gel obtained was stored for twelve months at 4°C. Samples of commercially available prestained molecular weight markers, denatured by the addition of DTT, were separated on this gel using an electrode buffer of Tris (25 mM), Glycine (191 mM) and SDS (0.1%). The gel was electrophoresed for 40 minutes at a voltage of 150V. The proteins in the standard that remained on the gel were 170 kDa, 130 kDa, 100 kDa, 70 kDa, 55 kDa, 40 kDa. The markers were distributed along the gel such that the protein of 170 kDa was about 50% of the way down the gel and the protein of 40 kDa was about 95% of the way down the gel. During the gel storage at 4^{o}C, while pH of the gel increased from 6.3 to about 6.9, a notable hydrolysis was observed.

### Examples 4

A polyacrylamide gel was cast with an acrylamide concentration of 4%T/2.6%C in the stacking region and 12%T/2.6%C in the resolving region of the gel. The concentration of Tris, Glycine, Asparagine and HEPES in the gel was 0.07 M, 0.2 M, 0.1 M and 0.02 M respectively, the pH being adjusted to 6.3 using HCl. The polyacrylamide gel obtained was stored at 4^{o}C for twelve months. Samples of prestained molecular weight marker which was a commercially available marker containing samples denatured by the addition of DTT were separated on this gel using an electrode buffer of Tris (25 mM) Glycine (191 mM) and SDS (0.1%). The gel was electrophoresed for 40 minutes at a voltage of 150V. The proteins in the standard that remained on the gel were 170 kDa, 130 kDa, 100 kDa, 70 kDa, 55 kDa, 40 kDa, 35 kDa, 25 kDa, 15 kDa and 10 kDa. The markers were distributed along the gel such that the protein of 170 kDa was about 13% of the way down the gel and the protein of 10 kDa was about 87% of the way down the gel. The added HEPES helped to keep the pH of the gel at about pH 6.2 under the storage at 4^{o}C. The gels were remarkably retarded in the rate of hydrolysis compared with the gels without HEPES. This made it possible to store the gels for over a year without no change or deterioration in the gel shape and performance. While this invention has been described in terms of some specific examples, many modifications and variations are possible. It is therefore understood that within the scope of the appended claims, the invention may be realized otherwise than as specifically described.

## Claims

1. A precast polyacrylamide gel for use in gel electrophoresis, comprising
i) an aqueous solution of tris(hydroxymethyl)aminomethane (Tris) at a concentration of from 0.05 M to 0.15 M;
ii) a tertiary amine at a concentration of from 0.001 M to 0.2 M comprising in the molecule one sulfonic group, the pKa of said amine at the temperature of 25°C having a value of from 6.6 to 8.0;
iii) optionally one or more ampholytes exhibiting an isoelectric point (pI) of from 5.4 to 6.4 at a total concentration of from 0.01 M to 0.4 M;
iv) hydrochloric acid to adjust the pH to between 5.5 and 7.5 at the temperature of 25°C; and
vii) polyacrylamide, preferably at a concentration of from 4 w/v % to 20 w/v %.

2. A precast gel according to claim 1, comprising
i) an aqueous solution of Tris at a concentration of 0.05 to 0.15 M;
ii) an N,N'-disubstituted piperazine (DSP) comprising in the molecule one sulfonic group, the pKa of said amine at the temperature of 25°C having a value of from 6.6 to 8.0, of formula (I) 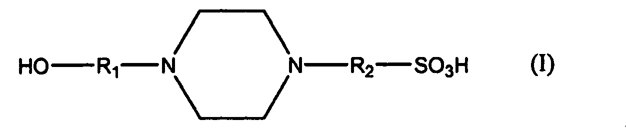 at a concentration of from 0.001 M to 0.1 M, wherein
R₁ and R₂ are independently selected from C₁-C₄ alkylene groups optionally substituted with a lower alkyl or hydroxyl group;
iii) one or more ampholytes exhibiting an isoelectric point (pI) of from 5.4 to 6.4 at a total concentration of from 0.01 to 0.08 or from 0.2 M to 0.4 M; and
iv) hydrochloric acid to adjust the pH to between 5.5 and 7.0 at the temperature of 25°C.

3. A precast gel according to claim 1, comprising
i) an aqueous solution of Tris at a concentration of from 0.05 M to 0.15 M;
ii) an N,N'-disubstituted piperazine (DSP) comprising in the molecule one sulfonic group, the pKa of said amine at the temperature of 25°C having a value of from 6.6 to 8.0, of formula (I) 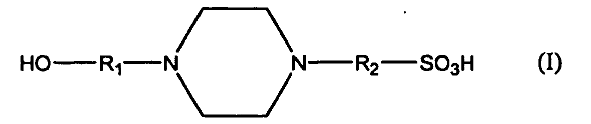 at a concentration of from 0.001 M to 0.1 M, wherein
R₁ and R₂ are independently selected from C₂-C₃ alkylene groups optionally substituted with a hydroxyl group;
iii) one or more ampholytes exhibiting an isoelectric point (pI) of from 5.4 to 6.4 at a total concentration of from 0.2 M to 0.4 M; and
iv) hydrochloric acid to adjust the pH to between 6.0 and 7.0 at the temperature of 25°C.

4. A precast gel according to claim 1, comprising
i) Tris at a concentration of 0.06 M to 0.10 M;
ii) a N,N'-disubstituted piperazine (DSP) comprising in the molecule one sulfonic group, the pKa of said amine at the temperature of 25°C having a value of from 6.6 to 7.6, of formula (I) 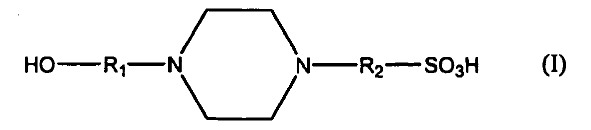 at a concentration of from 0.01 M to 0.1 M, wherein
R₁ and R₂ are independently selected from C₂-C₃ alkylene groups optionally substituted with a hydroxyl group;
iii) one or more ampholytes selected from the group consisting of glycine, serine, asparagine, tryptophane, methionine, and phenylalanine at a total concentration of from 0.2 M to 0.4 M;
iv) hydrochloric acid to adjust the pH to between 6.2 and 6.8 at the temperature of 25°C; and
v) polyacrylamide at a concentration of from 4 w/v % to 20 w/v%.

5. A gel according to claim 4, comprising asparagine and glycine or asparagine and serine at a total concentration of from 0.2 M to 0.35 M.

6. A gel according to claim 4, wherein said DSP is HEPES.

7. A gel according to claim 1, comprising Tris at a concentration of 0.06 to 0.1 M, HEPES at a concentration of from 0.001 to 0.1 M, one or more ampholytes at a total concentration of from 0.2 to 0.35 M selected from asparagine, serine, glycine, tryptophane, methionine, and phenylalanine, and hydrochloric acid to pH of from 6.2 to 6.8.

8. A gel according to claim 1 for use in gel electrophoresis under denaturation conditions, preferably SDS-PAGE electrophoreis, or under nondenaturing condisitons.

9. A gel according to claim 1, further comprising at least one component selected from surfactants, solvents, electrolytes, denaturation agents, and dyes.

10. A precast gel according to claim 1, comprising
i) an aqueous solution of tris(hydroxymethyl)aminomethane (Tris) at a concentration of 0.06 to 0.10 M;
ii) HEPES at a concentration of from 0.003 to 0.05 M;
iii) one or more ampholytes exhibiting an isoelectric point (pI) of from 5.4 to 6.4 at a total concentration of from 0.2 to 0.35 M;
iv) polyacrylamide at a concentration of from 4 w/v % to 20 w/v%;
v) optionally one or more components selected from surfactants, solvents, electrolytes, denaturation agents, and dyes; and
vi) hydrochloric acid, to adjust the pH to between 6.2 and 6.8 at the temperature of 25°C.

11. A precast gel according to any one of claims 1 to 10, having a shelf life of at least 12 months.

12. A method of preparing a stable, high performance gel for electrophoresis of biomolecules, comprising
i) providing an aqueous solution comprising from 4 to 20 w/v % acrylamide (AA) and bis-acrylamide; from 0.05 to 0.15 M Tris; an N,N'-disubstituted piperazine (DSP) of formula (I) 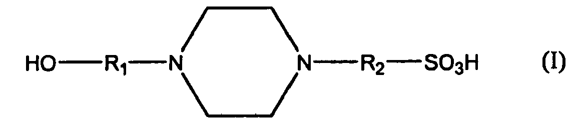 at a concentration of from 0.001 to 0.2 M, wherein
R₁ and R₂ are independently selected from C₁-C₄ alkylene groups optionally substituted with a lower alkyl or hydroxyl group; optionally one or more ampholytes exhibiting an isoelectric point (pI) of from 5.4 to 6.4 at a total concentration of from 0.01 to 0.4 M; and hydrochloric acid to pH between 5.5 and 7.5 at the temperature of 25°C;
ii) adding into the mixture obtained in step i) an aqueous solution of ammonium persulfate while mixing, and adding TEMED while mixing;
iii) carefully homogenizing the mixture obtained in step ii) without trapping air bubbles;
iv) casting the mixture obtained in step iii) into a slab-shape of desired dimensions; and
v) sealing the slab-shaped gel in a polymeric wrap.

13. A method according to claim 12, comprising providing an aqueous solution comprising AA, Tris at a concentration of 0.05 to 0.15 M, HEPES at a concentration of from 0.001 to 0.1 M, at least one ampholyte selected from glycine, serine, asparagine, tryptophane, methionine, and phenylalanine at a concentration of from 0.2 to 0.35 M, and hydrochloric acid to a pH between 6.0 and 7.0; and polymerizing said AA, thereby obtaining a slab gel.

14. A method according to claim 12, wherein said biomolecule is selected from oligopeptides, polypeptides, oligonucleotides, and polynucleotides, preferably a protein or nucleic acid.

15. A precast gel according to claim 1, wherein said amine is selected from BES, MOPS, HEPES, HEPPS, and HEPPSO and said ampholyte is selected from the group consisting of glycine, serine, asparagine, tryptophane, methionine, and phenylalanine.

## Patentansprüche

1. Vorgegossenes Polyacrylamidgel zur Verwendung in der Gelelektrophorese, umfassend
i) eine wässrige Lösung von Tris(hydroxymethyl)aminomethan (Tris) bei einer Konzentration von 0,05 M bis 0,15 M;
ii) ein tertiäres Amin bei einer Konzentration von 0,001 M bis 0,2 M umfassend eine Sulfongruppe im Molekül, wobei der pKa-Wert des Amins bei der Temperatur von 25°C einen Wert von 6,6 bis 8,0 aufweist;
iii) gegebenenfalls einen oder mehrere Ampholyte, die einen isoelektrischen Punkt (pl) von 5,4 bis 6,4 bei einer Gesamtkonzentration von 0,01 M bis 0,4 M zeigen;
iv) Salzsäure, um den pH-Wert auf zwischen 5,5 und 7,5 bei der Temperatur von 25°C einzustellen; und
vii) Polyacrylamid, bevorzugt bei einer Konzentration von 4 w/v% bis 20 w/v%.

2. Vorgegossenes Gel nach Anspruch 1, umfassend
i) eine wässrige Lösung von Tris bei einer Konzentration von 0,05 bis 0,15 M;
ii) ein N,N'-disubstituiertes Piperazin (DSP) der Formel (I) 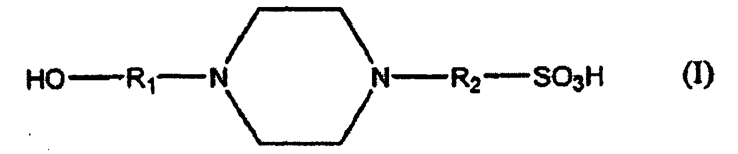 umfassend eine Sulfongruppe im Molekül, wobei der pKa-Wert des Amins bei der Temperatur von 25°C einen Wert von 6,6 bis 8,0 aufweist, bei einer Konzentration von 0,001 M bis 0,1 M, wobei
R₁ und R₂ unabhängig ausgewählt sind aus C₁-C₄-Alkylengruppen, die gegebenenfalls substituiert sind mit einer Niederalkyl- oder Hydroxylgruppe;
iii) einen oder mehrere Ampholyte, die einen isoelektrischen Punkt (pl) von 5,4 bis 6,4 bei einer Gesamtkonzentration von 0,01 bis 0,08 oder von 0,2 M bis 0,4 M zeigen; und
iv) Salzsäure, um den pH-Wert auf zwischen 5,5 und 7,0 bei der Temperatur von 25°C einzustellen.

3. Vorgegossenes Gel nach Anspruch 1, umfassend
i) eine wässrige Lösung von Tris bei einer Konzentration von 0,05 M bis 0,15 M;
ii) ein N,N'-disubstituiertes Piperazin (DSP) der Formel (I) 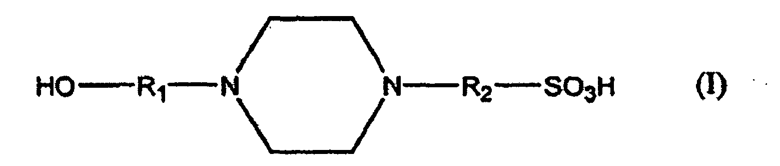 umfassend eine Sulfongruppe im Molekül, wobei der pKa-Wert des Amins bei der Temperatur von 25°C einen Wert von 6,6 bis 8,0 aufweist, bei einer Konzentration von 0,001 M bis 0,1 M, wobei R₁ und R₂ unabhängig ausgewählt sind aus C₂-C₃-Alkylengruppen, die gegebenenfalls substituiert sind mit einer Hydroxylgruppe;
iii) einen oder mehrere Ampholyte, die einen isoelektrischen Punkt (pl) von 5,4 bis 6,4 bei einer Gesamtkonzentration von 0,2 M bis 0,4 M zeigen; und
iv) Salzsäure, um den pH-Wert auf zwischen 6,0 und 7,0 bei der Temperatur von 25°C einzustellen.

4. Vorgegossenes Gel nach Anspruch 1, umfassend
i) Tris bei einer Konzentration von 0,06 M bis 0,10 M;
ii) ein N,N'-disubstituiertes Piperazin (DSP) der Formel (I) 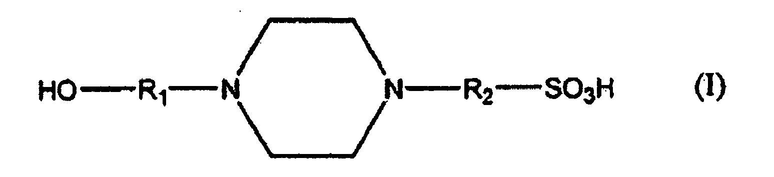 umfassend eine Sulfongruppe im Molekül, wobei der pKa-Wert des Amins bei der Temperatur von 25°C einen Wert von 6,6 bis 7,6 aufweist, bei einer Konzentration von 0,01 M bis 0,1 M, wobei R₁ und R₂ unabhängig ausgewählt sind aus C₂-C₃-Alkylengruppen, die gegebenenfalls substituiert sind mit einer Hydroxylgruppe;
iii) einen oder mehrere Ampholyte, die ausgewählt sind aus der Gruppe bestehend aus Glycin, Serin, Asparagin, Tryptophan, Methionin und Phenylalanin, bei einer Gesamtkonzentration von 0,2 M bis 0,4 M;
iv) Salzsäure, um den pH-Wert auf zwischen 6,2 und 6,8 bei der Temperatur von 25°C einzustellen; und
v) Polyacrylamid bei einer Konzentration von 4 w/v% bis 20 w/v%.

5. Gel nach Anspruch 4, umfassend Asparagin und Glycin oder Asparagin und Serin bei einer Gesamtkonzentration von 0,2 M bis 0,35 M.

6. Gel nach Anspruch 4, wobei das DSP HEPES ist.

7. Gel nach Anspruch 1, umfassend Tris bei einer Konzentration von 0,06 bis 0,1 M, HEPES bei einer Konzentration von 0,001 bis 0,1 M, einen oder mehrere Ampholyte bei einer Gesamtkonzentration von 0,2 bis 0,35 M , die ausgewählt sind aus Asparagin, Serin, Glycin, Tryptophan, Methionin und Phenylalanin, und Salzsäure zu einem pH-Wert von 6,2 bis 6,8.

8. Gel nach Anspruch 1 zur Verwendung in der Gelelektrophorese unter denaturierenden Bedingungen, bevorzugt SDS-PAGE-Elektrophorese, oder unter nicht-denaturierenden Bedingungen.

9. Gel nach Anspruch 1, weiter umfassend mindestens eine Komponente, die ausgewählt ist aus Tensiden, Lösungsmitteln, Elektrolyten, Denaturierungsmitteln und Farbstoffen.

10. Vorgegossenes Gel nach Anspruch 1, umfassend
i) eine wässrige Lösung von Tris(hydroxymethyl)aminomethan (Tris) bei einer Konzentration von 0,06 bis 0,10 M;
ii) HEPES bei einer Konzentration von 0,003 bis 0,05 M;
iii) einen oder mehrere Ampholyte, die einen isoelektrischen Punkt (pl) von 5,4 bis 6,4 bei einer Gesamtkonzentration von 0,2 bis 0,35 M zeigen;
iv) Polyacrylamid bei einer Konzentration von 4 w/v% bis 20 w/v%;
v) gegebenenfalls eine oder mehrere Komponenten, die ausgewählt sind aus Tensiden, Lösungsmitteln, Elektrolyten, Denaturierungsmitteln und Farbstoffen; und
vi) Salzsäure, um den pH-Wert auf zwischen 6,2 und 6,8 bei der Temperatur von 25°C einzustellen.

11. Vorgegossenes Gel nach einem der Ansprüche 1 bis 10, das eine Haltbarkeit von mindestens 12 Monaten aufweist.

12. Verfahren zur Herstellung eines stabilen Hochleistungsgels für die Elektrophorese von Biomolekülen, umfassend
i) Bereitstellen einer wässrigen Lösung umfassend von 4 bis 20 w/v % Acrylamid (AA) und Bisacrylamid; von 0,05 bis 0,15 M Tris; ein N,N'-disubstituiertes Piperazin (DSP) der Formel (I) 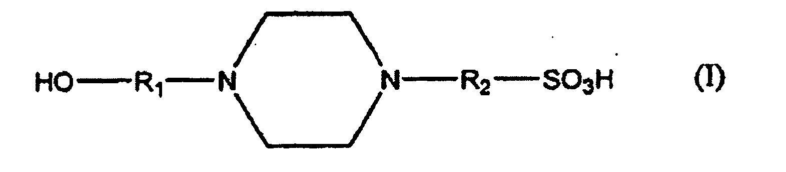 bei einer Konzentration von 0,001 bis 0,2 M, wobei
R₁ und R₂ unabhängig ausgewählt sind aus C₁-C₄-Alkylengruppen, die gegebenenfalls substituiert sind mit einer Niederalkyl- oder Hydroxylgruppe; gegebenenfalls einen oder mehrere Ampholyte, die einen isoelektrischen Punkt (pl) von 5,4 bis 6,4 bei einer Gesamtkonzentration von 0,01 bis 0,4 M zeigen; und Salzsäure zu einem pH-Wert zwischen 5,5 und 7,5 bei der Temperatur von 25°C;
ii) Zugeben einer wässrigen Lösung von Ammoniumpersulfat zu der in Schritt i) erhaltenen Mischung während des Mischens, und Zugeben von TEMED während des Mischens;
iii) vorsichtiges Homogenisieren der in Schritt ii) erhaltenen Mischung ohne Luftblasen einzufangen;
iv) Gießen der in Schritt iii) erhaltenen Mischung in Plattenform gewünschter Dimensionen; und
v) Versiegeln des plattenförmigen Gels in einer Polymerhülle.

13. Verfahren nach Anspruch 12, umfassend Bereitstellen einer wässrigen Lösung umfassend AA, Tris bei einer Konzentration von 0,05 bis 0,15 M, HEPES bei einer Konzentration von 0,001 bis 0,1 M, mindestens einen Ampholyt, der ausgewählt ist aus Glycin, Serin, Asparagin, Tryptophan, Methionin und Phenylalanin, bei einer Konzentration von 0,2 bis 0,35 M, und Salzsäure zu einem pH-Wert zwischen 6,0 und 7,0; und Polymeriseren des AA, wodurch ein Plattengel erhalten wird.

14. Verfahren nach Anspruch 12, wobei das Biomolekül ausgewählt ist aus Oligopeptiden, Polypeptiden, Oligonukleotiden und Polynukleotiden, bevorzugt einem Protein oder einer Nukleinsäure.

15. Vorgegossenes Gel nach Anspruch 1, wobei das Amin ausgewählt ist aus BES, MOPS, HEPES, HEPPS und HEPPSO, und der Ampholyt ausgewählt ist aus der Gruppe bestehend aus Glycin, Serin, Asparagin, Tryptophan, Methionin und Phenylalanin.

## Revendications

1. Gel de polyacrylamide précoulé, destiné à être utilisé en électrophorèse sur gel, comprenant
i) une solution aqueuse de tris(hydroxyméthyl)aminométhane (Tris) à une concentration de 0,05 M à 0,15 M ;
ii) une amine tertiaire à une concentration de 0,001 M à 0,2 M comprenant dans la molécule un groupe sulfonique, le pKa de ladite amine à la température de 25°C ayant une valeur de 6,6 à 8,0 ;
iii) facultativement, un ou plusieurs ampholytes présentant un point isoélectrique (pI) de 5,4 à 6,4 à une concentration totale de 0,01 M à 0,4 M ;
iv) de l'acide chlorhydrique pour ajuster le pH entre 5,5 et 7,5 à la température de 25°C ; et
vi) du polyacrylamide, de préférence à une concentration de 4 % en poids/volume à 20 % en poids/volume.

2. Gel précoulé suivant la revendication 1, comprenant
i) une solution aqueuse de Tris à une concentration de 0,05 à 0,15 M ;
ii) une pipérazine N,N'-disubstituée (DSP) comprenant dans la molécule un groupe sulfonique, le pKa de ladite amine à la température de 25°C ayant une valeur de 6,6 à 8,0, de formule (I) 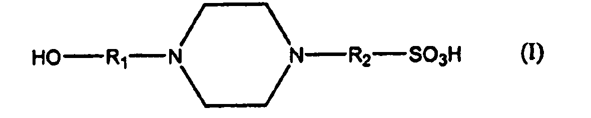 à une concentration de 0,001 M à 0,1 M, formule dans laquelle
R₁ et R₂ sont choisis indépendamment parmi des groupes alkylène en C₁ à C₄ facultativement substitués avec un groupe alkyle inférieur ou hydroxyle ;
iii) un ou plusieurs ampholytes présentant un point isoélectrique (pI) de 5,4 à 6,4 à une concentration totale de 0,01 à 0,08 ou de 0,2 M à 0,4 M ; et
iv) de l'acide chlorhydrique pour ajuster le pH entre 5,5 et 7,0 à la température de 25°C.

3. Gel précoulé suivant la revendication 1, comprenant
i) une solution aqueuse de Tris à une concentration de 0,05 M à 0,15 M ;
ii) une pipérazine N,N'-disubstituée (DSP) comprenant dans la molécule un groupe sulfonique, le pKa de ladite amine à la température de 25°C ayant une valeur de 6,6 à 8,0, de formule (I) 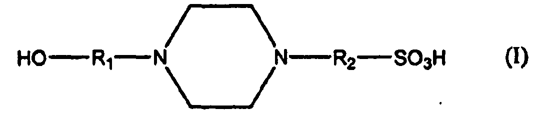 à une concentration de 0,001 M à 0,1 M, formule dans laquelle
R₁ et R₂ sont choisis indépendamment parmi des groupes alkylène en C₂ et C₃ facultativement substitués avec un groupe hydroxyle ;
iii) un ou plusieurs ampholytes présentant un point isoélectrique (pI) de 5,4 à 6,4 à une concentration totale de 0,2 M à 0,4 M ; et
iv) de l'acide chlorhydrique pour ajuster le pH entre 6,0 et 7,0 à la température de 25°C.

4. Gel précoulé suivant la revendication 1, comprenant
i) du Tris à une concentration de 0,06 M à 0,10 M ;
ii) une pipérazine N,N'-disubstituée (DSP) comprenant dans la molécule un groupe sulfonique, le pKa de ladite amine à la température de 25°C ayant une valeur de 6,6 à 7,6, de formule (I) 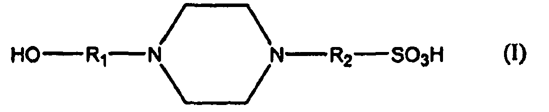 à une concentration de 0,001 M à 0,1 M, formule dans laquelle
R₁ et R₂ sont choisis indépendamment parmi des groupes alkylène en C₂ et C₃ facultativement substitués avec un groupe hydroxyle ;
iii) un ou plusieurs ampholytes choisis dans le groupe consistant en la glycine, la sérine, l'asparagine, le tryptophane, la méthionine et la phénylalanine à une concentration totale de 0,2 M à 0,4 M ;
iv) de l'acide chlorhydrique pour ajuster le pH entre 6,2 et 6,8 à la température de 25°C ; et
v) du polyacrylamide à une concentration de 4 % en poids/volume à 20 % en poids/volume.

5. Gel suivant la revendication 4, comprenant de l'asparagine et de la glycine ou de l'asparagine et de la sérine à une concentration totale de 0,2 M à 0,35 M.

6. Gel suivant la revendication 4, dans lequel ladite DSP consiste en HEPES.

7. Gel suivant la revendication 1, comprenant du Tris à une concentration de 0,06 à 0,1 M, du HEPES à une concentration de 0,001 à 0,1 M, un ou plusieurs ampholytes à une concentration totale de 0,2 à 0,35 M choisis entre l'asparagine, la sérine, la glycine, le tryptophane, la méthionine et la phénylalanine, et de l'acide chlorhydrique pour parvenir à un pH de 6,2 à 6,8.

8. Gel suivant la revendication 1, destiné à être utilisé en électrophorèse sur gel dans des conditions de dénaturation, de préférence en électrophorèse SDS-PAGE, ou bien dans des conditions non dénaturantes.

9. Gel suivant la revendication 1, comprenant en outre au moins un constituant choisi entre des agents tensioactifs, des solvants, des électrolytes, des agents dénaturants et des colorants.

10. Gel précoulé suivant la revendication 1, comprenant
i) une solution aqueuse de tris(hydroxyméthyl)aminométhane (Tris) à une concentration de 0,06 à 0,10 M ;
ii) du HEPES à une concentration de 0,03 à 0,05 M ;
iii) un ou plusieurs ampholytes présentant un point isoélectrique (pI) de 5,4 à 6,4 à une concentration totale de 0,2 à 0, 35 M ;
iv) du polyacrylamide à une concentration de 4 % en poids/volume à 20 % poids/volume ;
v) facultativement, un ou plusieurs constituants choisis entre des agents tensioactifs, des solvants, des électrolytes, des agents dénaturants et des colorants ; et
vi) de l'acide chlorhydrique pour ajuster le pH entre 6,2 et 6,8 à la température de 25°C.

11. Gel précoulé suivant l'une quelconque des revendications 1 à 10, ayant une durée de conservation d'au moins 12 mois.

12. Procédé pour la préparation d'un gel stable à hautes performances pour l'électrophorèse de biomolécules, comprenant les étapes consistant à
i) fournir une solution aqueuse comprenant 4 à 20 % en poids/volume d'acrylamide (AA) et de bisacrylamide ; 0,05 à 0,15 M de Tris ; une pipérazine N,N'-disubstituée (DSP) de formule (I) 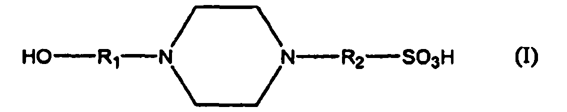 à une concentration de 0,001 M à 0,2 M, formule dans laquelle
R₁ et R₂ sont choisis indépendamment parmi des groupes alkylène en C₁ à C₄ facultativement substitués avec un groupe alkyle inférieur ou hydroxyle ; facultativement, un ou plusieurs ampholytes présentant un point isoélectrique (pI) de 5,4 à 6,4 à une concentration totale de 0,01 M à 0,4 M ; et de l'acide chlorhydrique à un pH de 5,5 à 7,5 à la température de 25°C ;
ii) ajouter au mélange obtenu dans l'étape i) une solution aqueuse de persulfate d'ammonium tout en mélangeant, et ajouter du TEMED tout en mélangeant ;
iii) homogénéiser avec précaution le mélange obtenu dans l'étape ii) sans piégeage de bulles d'air ;
iv) couler le mélange obtenu dans l'étape iii) sous forme d'une plaque ayant les dimensions désirées ; et
v) emballer hermétiquement le gel en forme de plaque dans un emballage polymère.

13. Procédé suivant la revendication 12, comprenant les étapes consistant à fournir une solution aqueuse comprenant du AA, du Tris à une concentration de 0,05 à 0,15 M, du HEPES à une concentration de 0,001 à 0,1 M, au moins un ampholyte choisi entre la glycine, la sérine, l'asparagine, le tryptophane, la méthionine et la phénylalanine à une concentration de 0,2 à 0,35 M, et de l'acide chlorhydrique à un pH de 6,0 à 7,0 ; et à polymériser ledit AA, en obtenant ainsi un gel en forme de plaque.

14. Procédé suivant la revendication 12, dans lequel ladite biomolécule est choisie entre des oligopeptides, des polypeptides, des oligonucléotides et des polynucléotides, de préférence une protéine ou un acide nucléique.

15. Gel précoulé suivant la revendication 1, dans lequel ladite amine est choisie entre le BES, le MOPS, le HEPES, le HEPPS et le HEPPSO et ledit ampholyte est choisi dans le groupe consistant en la glycine, la sérine, l'asparagine, le tryptophane, la méthionine et la phénylalanine.
